# EUROPÄISCHE PATENTSCHRIFT

(11) **EP 1 046 548 B1**
(45) Veröffentlichungstag und Bekanntmachung des Hinweises auf die Patenterteilung: **11.06.2003**
(21) Anmeldenummer: 00108007.6
(22) Anmeldetag: 19.04.2000
(51) Int. Cl.: B60R 21/045

(54) **Knie-Rückhalteeinrichtung für Fahrzeuge**
Knee protection device in a vehicle
Dispositif de protection des genoux dans un véhicule

(30) Priorität: 22.04.1999 DE 29907163 U
(43) Veröffentlichungstag der Anmeldung: 25.10.2000
(73) Patentinhaber: TRW Occupant Restraint Systems GmbH & Co. KG, 73553 Alfdorf (DE)
(72) Erfinder: Freisler, Werner, 89551 Königsbronn (DE); Kleinmann, Bernd, 73527 Schwäbisch Gmünd (DE); Schultz, Dirk, 73527 Schwäbisch Gmünd (DE); Zischka, Gerd, 73527 Schwäbisch Gmünd (DE); Bernhard, Klaus, 73565 Spraitbach (DE); Mohr, Robert, 71384 Weinstadt (DE)
(74) Vertreter: Kitzhofer, Thomas, Dipl.-Ing.

(56) Entgegenhaltungen:
- US-A- 4 662 649
- PATENT ABSTRACTS OF JAPAN vol. 1996, no. 12, 26. Dezember 1996 (1996-12-26) & JP 08 216816 A (SUZUKI MOTOR CORP), 27. August 1996 (1996-08-27)
- PATENT ABSTRACTS OF JAPAN vol. 014, no. 491 (M-1040), 25. Oktober 1990 (1990-10-25) & JP 02 200547 A (MAZDA MOTOR CORP), 8. August 1990 (1990-08-08)
- PATENT ABSTRACTS OF JAPAN vol. 013, no. 398 (M-866), 5. September 1989 (1989-09-05) & JP 01 141145 A (NISHIKAWA KASEI KK), 2. Juni 1989 (1989-06-02)
- PATENT ABSTRACTS OF JAPAN vol. 1996, no. 11, 29. November 1996 (1996-11-29) & JP 08 175302 A (ARACO CORP), 9. Juli 1996 (1996-07-09)
- PATENT ABSTRACTS OF JAPAN vol. 018, no. 245 (M-1603), 11. Mai 1994 (1994-05-11) & JP 06 032195 A (NISSAN MOTOR CO LTD), 8. Februar 1994 (1994-02-08)

## Beschreibung

Die Erfindung betrifft eine Knie-Rückhalteeinrichtung für Fahrzeuge, mit einer Grundplatte und einem Kniefängerbauteil, das an der Grundplatte befestigt ist, wobei das Kniefängerbauteil eine Lastverteilerplatte und eine Abdeckung aus Kunststoff und die Abdeckung eine der Lastverteilerplatte zugewandte Rückseite und eine entgegengesetzt gerichtete Vorderseite aufweist.

Zusätzlich zu den bekannten Sicherheitsrückhalteeinrichtungen Airbag und Gurt werden zunehmend aktive Knie-Rückhalteeinrichtungen eingesetzt, um ein Durchrutschen des Fahrzeuginsassen in den Fußraum zu verhindern, insbesondere wenn der Insasse nicht angeschnallt ist oder keine optimale Sitzposition einhält.

Eine gattungsgemäße Knie-Rückhaltevorrichtung ist aus der EP 0 872 388 A2 bekannt. Darin wird eine Knie-Rückhaltevorrichtung beschrieben, bei der ein Kniefängerbauteil im Rückhaltefall von einem aufblasbaren Luftsack in Richtung der Knie des Fahrzeuginsassen verschoben wird. Das Kniefängerbauteil besteht dabei aus einer steifen Lastverteilerplatte aus Metall, die in ein elastisches Kunststoffmaterial eingebettet ist. Die Lastverteilerplatte verhilft dem Kniefängerbauteil zur notwendigen Stabilität und nimmt durch Verformung kinetische Energie von den Knien des Fahrzeuginsassen auf, während das elastische Kunststoffmaterial als Polsterung dient. Das Kniefängerbauteil ist mittels separater Befestigungsstifte an der Instrumententafel oder an der Grundplatte der Luftsackeinheit lösbar befestigt. Durch das Einbetten der metallenen Lastverteilerplatte in das elastische Kunststoffmaterial lassen sich die verschiedenartigen Materialien bei einer später erforderlichen Entsorgung nur unter verhältnismäßig großem Aufwand wieder trennen. Die Verwendung von separaten Befestigungsstiften zur Befestigung des Kniefängerbauteils fügt der Baugruppe einen weiteren Werkstoff hinzu und erfordert außerdem zusätzlichen Aufwand bei der Montage des Kniefängerbauteils. Da das Kniefängerbauteil im sichtbaren Bereich der Instrumententafel angeordnet ist, muß die Abdeckung dem optischen Erscheinungsbild der Instrumententafel angepasst sein.

Der Erfindung liegt die Aufgabe zugrunde, eine Knie-Rückhaltevorrichtung zu schaffen, bei der die Abdeckung des Kniefängerbauteils mit der Lastverteilerplatte einfach und kostengünstig verbunden ist. Im Hinblick auf die vom Gesetzgeber geforderte Entsorgung von Altfahrzeugen ist eine leichte Trennbarkeit der verwendeten Materialien vorzusehen.

Dies wird bei einer Knie-Rückhalteeinrichtung der eingangs genannten Art dadurch erreicht, daß die Abdeckung an der Lastverteilerplatte mittels an der Rückseite der Abdeckung angeformter Zapfen formschlüssig befestigt ist, die durch entsprechende Öffnungen in der Lastverteilerplatte hindurchragen und die an ihren freien Enden so umgeformt sind, daß die freien Enden gegenüber den Öffnungen radial nach außen vorstehen. Dadurch, daß die Lastverteilerplatte von der Abdeckung nicht eingehüllt wird, lassen sich die Materialien später wieder auf einfache Weise trennen. Indem die Zapfen an der Abdeckung angeformt sind, wird eine Einheit von Zapfen, also Befestigungsmittel, und Abdeckung erzeugt. Es ist kein separates Befestigungsmittel vorgesehen, welches dementsprechend separat beim Zusammenbau des Kniefängerbauteils zugeführt und beim Recycling aus dem Kniefängerbauteil entfernt werden müßte. Somit sind weniger Bauteile als auch weniger unterschiedliche Materialien als beim Stand der Technik vorgesehen. Darüber hinaus ist die Befestigung sehr einfach, denn die Zapfen müssen an ihrem freien Ende nur umgeformt werden, was auf sehr einfache Weise durch Temperatur und/oder Druckeinwirkung erfolgen kann.

Gemäß einer bevorzugten Ausführungsform ist die Abdeckung aus thermoplastischem Kunststoff hergestellt, und die Zapfen sind unter Hitzeeinwirkung umgeformt. Das freie Ende des Zapfens kann eine Verdickung aufweisen oder auch nur umgebogen sein, um radial gegenüber den Öffnungen vorzustehen. Das Umformen des freien Endes kann z.B. mittels Ultraschall erfolgen. Die Herstellung des Kniefängerbauteils kann dadurch geschehen, daß zuerst Abdeckung und Lastverteilerplatte separat hergestellt werden und die Abdeckung anschließend an der Lastverteilerplatte befestigt wird, indem die Zapfen durch die Öffnungen gesteckt und an ihren freien Enden umgeformt werden. Eine andere Möglichkeit besteht darin, zuerst die Lastverteilerplatte mit einem Kunststoff zu umspritzen oder zu umschäumen, wobei die Zapfen mit angespritzt oder angeschäumt werden und dabei ihre endgültige Form samt nach außen vorstehenden freien Enden erhalten.

Gemäß der bevorzugten Ausführungsform ist die Knie-Rückhalteeinrichtung als aktive Rückhalteeinrichtung vorgesehen, indem eine Expansionsvorrichtung zwischen Kniefängerbauteil und Grundplatte das Kniefängerbauteil im Rückhaltefall in Richtung Knie verschiebt.

Einige der Zapfen können durch Öffnungen in der Grundplatte hindurchgeführt und auf der Rückseite derselben umgeformt sein, wodurch das Kniefängerbauteil an der Grundplatte befestigt ist. Durch Wahl des Radius der Zapfen oder der Art des Kunststoffmaterials kann erreicht werden, daß sich das Kniefängerbauteil bei einer weitgehend vorherbestimmbaren Kraft von der Grundplatte löst.

Gemäß einer anderen Ausführungsform der Erfindung sind in der Grundplatte oder der Lastverteilerplatte Öffnungen vorgesehen, durch die an dem Kniefängerbauteil angebrachte Befestigungselemente ragen, wobei die Berandung der Öffnungen radial nach innen ragende Lappen definiert und die Befestigungselemente die Grundplatte bzw. die Lastverteilerplatte wenigstens in einem Teilbereich der Berandung hintergreifen. Die Berandung ist so ausgebildet, daß sie im Rückhaltefall von den Befestigungselementen verformt wird und sich die Befestigungselemente von der Grundplatte bzw. Lastverteilerplatte lösen. An der Abdeckung angeformte Zapfen könnten bei dieser Ausführungsform Teil der Befestigungselemente sein.

Durch die Verwendung einer metallenen Lastverteilerplatte und einer metallenen Grundplatte bleibt die Höhe der erforderlichen Kräfte zum Lösen des Kniefängerbauteils weitgehend temperatur- und alterungsunabhängig, da die Festigkeitseigenschaften in den geforderten Temperaturbereichen annähernd konstant sind.

Die Befestigungsarten der Abdeckung an der Lastverteilerplatte sind unabhängig von den Befestigungsarten des Kniefängerbauteils an der Grundplatte. Die Lastverteilerplatte und die Grundplatte sind mittels wenigstens eines Bolzens miteinander verbunden. Diese Verbindung wird beim Aktivieren der Expansionsvorrichtung durch die von der Expansionsvorrichtung auf das Kniefängerbauteil ausgeübte Kraft zerstört, damit sich das Kniefängerbauteil in Richtung Knie bewegen kann. Diese Zerstörung der Verbindung sollte möglichst bei exakt vorbestimmbaren Kräften erfolgen. Zudem sollten keine fliegenden Einzelteile entstehen.

Der Bolzen wird gemäß einer Ausführungsform beim Aktivieren der Expansionsvorrichtung zerstört, wobei er beispielsweise eine Sollbruchstelle aufweisen kann. Darüber hinaus kann sich der Bolzen auch von der Grundplatte oder der Lastverteilerplatte lösen und im anderen Teil befestigt bleiben.

Eine Ausführungsform sieht vor, daß der Bolzen ein Gewindebolzen ist, auf den eine Mutter aufgedreht ist. Bolzen und/oder Mutter sind an der Lastverteilerplatte oder der Grundplatte befestigt und können hierzu in die jeweilige Platte eingeschlagen, eingeklebt oder zum Beispiel eingepreßt werden. Auch ist es möglich, den Bolzen nach dem Setzen umzuformen, indem er vernietet, gestaucht oder gepreßt wird, um eine formschlüssige Verbindung zu erhalten. Der Bolzen kann ein Stahloder z.B. auch ein Aluminiumbolzen sein. Falls auf den Schraubbolzen eine Mutter aufgedreht wird, kann der Schraubbolzen auf der Unterseite seines Kopfes eine erhöhte Rauhigkeit aufweisen, z.B. eine Verzahnung besitzen, wodurch ein Verdrehen des Schraubbolzens beim Aufschrauben der Mutter verhindert wird.

Gemäß einer anderen Ausführungsform ist vorgesehen, daß die Grundplatte und die Lastverteilerplatte miteinander so verklebt sind, daß die Verbindung beim Aktivieren der Expansionsvorrichtung durch die von dieser auf das Kniefängerbauteil ausgeübte Kraft zerstört wird. Diese Klebeverbindung kann z.B. mittels Epoxidharz, einem aneroben Kleb- und/oder Dichtstoff, Zyanacrylat, Silikon oder z.B. Polyurethan erfolgen.

Die Klebeverbindung erlaubt eine größere gestalterische Freiheit der Geometrie von Lastverteilerplatte und Grundplatte als eine formschlüssige Verbindung.

Weitere Merkmale und Vorteile der Erfindung ergeben sich aus der folgenden Beschreibung mehrerer Ausführungsformen und aus den Zeichnungen, auf die Bezug genommen wird. In den Zeichnungen zeigen:
Figur 1 einen Schnitt durch die erfindungsgemäße Knie-Rückhalteeinrichtung nach einer ersten Ausführungsform;
Figur 2 einen Schnitt durch die Lastverteilerplatte mit daran befestigter Abdeckung nach einer zweiten Ausführungsform;
Figur 3 einen Schnitt durch Grundplatte, Lastverteilerplatte und Abdeckung im Bereich eines Befestigungselements gemäß einer dritten Ausführungsform;
Figur 4 einen Schnitt durch Grundplatte, Lastverteilerplatte und Abdeckung im Bereich eines Befestigungselements gemäß einer vierten Ausführungsform;
Figur 5a einen Schnitt durch Grundplatte, Lastverteilerplatte und Abdeckung im Bereich eines Befestigungselements gemäß einer fünften Ausführungsform;
Figur 5b eine Draufsicht auf die in Figur 5a gezeigte Grundplatte samt Befestigungseinrichtung;
Figur 6a einen Schnitt durch Grundplatte, Lastverteilerplatte und Abdeckung im Bereich eines Befestigungselements gemäß einer sechsten Ausführungsform,
Figur 6b einen vergrößerten Schnitt durch den in Figur 6a umrahmten Bereich,
Figuren 7a bis 7c eine vergrößerte Querschnittsansicht durch die Grundplatte und die Lastverteilerplatte, die deren Befestigung gemäß einer bevorzugten Ausführungsform darstellt, wobei Figur 7a die Befestigungsmittel vor der Verbindung, Figur 7b die Befestigungsmittel in verbundenem Zustand und Figur 7c die Befestigungsmittel nach Aktivierung der Expansionsvorrichtung zeigt,
Figuren 8a und 8b eine vergrößerte Querschnittsansicht durch die Grundplatte und die Lastverteilerplatte im Bereich einer modifizierten Verbindung, wobei Figur 8a die beiden Platten im verbundenen Zustand und Figur 8b die beiden Platten nach dem Aktivieren der Expansionsvorrichtung zeigt,
Figur 9 eine vergrößerte Querschnittsansicht durch die Grundplatte und die Lastverteilerplatte im Bereich einer Klebeverbindung und
Figuren 10a und 10b eine schematische Querschnittsansicht durch eine weitere Ausführungsform der erfindungsgemäßen Knie-Rückhalteeinrichtung, wobei Figur 10a die Einrichtung bei noch nicht aktivierter Expansionsvorrichtung und Figur 10b bei aktivierter Expansionsvorrichtung zeigt.

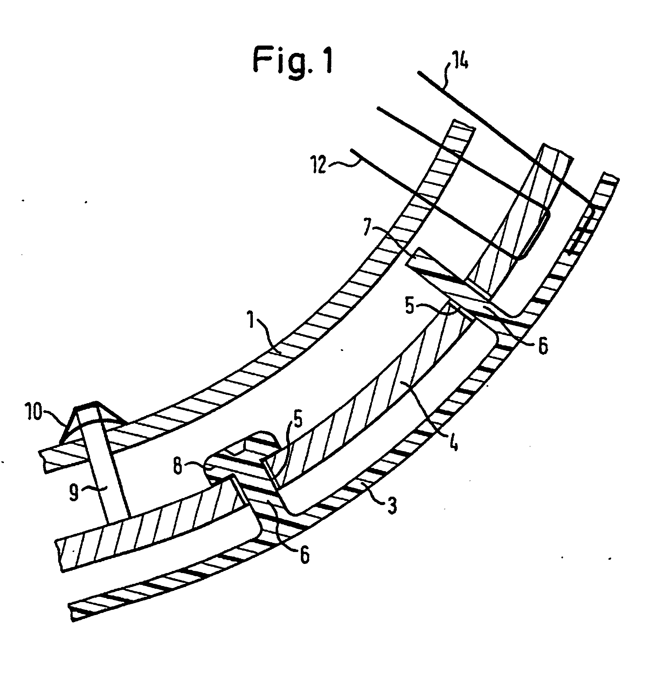

In Figur 1 ist ein Querschnitt durch eine Knie-Rückhalteeinrichtung mit einer Grundplatte 1 und einem Kniefängerbauteil gezeigt, das eine dem Fußraum zugewandte Abdeckung 3 aus Kunststoff und eine Lastverteilerplatte 4 aufweist. In der metallenen Lastverteilerplatte 4 sind Öffnungen 5 vorgesehen. An der Innenseite der Abdeckung 3 sind Zapfen 6 angeformt, die durch die Öffnungen 5 hindurchragen. Die freien Enden 7 der Zapfen 6 sind an der Rückseite der Lastverteilerplatte 4 unter Bildung einer Verdickung 8 umgeformt. Dadurch ist die Abdeckung 3 an der Lastverteilerplatte 4 ohne separate Bauteile formschlüssig befestigt; Abdeckung 3 und Lastverteilerplatte 4 sind ohne großen Aufwand wieder trennbar.

Die Zapfen 6 können durch an sich bekannte Verfahren, beispielsweise durch Ultraschall oder bei Verwendung eines thermoplastischen Kunststoffs für die Abdeckung 3 durch Hitzeeinwirkung umgeformt werden. Die Lastverteilerplatte 4 ist mit der Grundplatte 1 durch mehrere Befestigungselemente 9 verbunden. Als Befestigungselement 9 ist ein auf die Lastverteilerplatte 4 aufgeschweißter oder in sie eingepreßter Bolzen vorgesehen. Der Bolzen ist auf der Rückseite der Grundplatte 1 durch eine Federscheibe oder einen Clip 10 gesichert. Äquivalent ist als Befestigungselement auch eine Schraube mit Mutter, ein Plastiksteckstift oder ähnliches möglich.

Damit die Bewegung der Knie-Rückhalteeinrichtung im Rückhaltefall definiert vorgegeben wird, sind mehrere sogenannte Fangbänder 12 oder 14 vorgesehen. Die dargestellten Fangbänder 12 und 14 sind Beispiele für die Anordnung von Fangbändern am Kniefängerbauteil. Eine Möglichkeit der Anbringung eines Fangbandes ist seine Befestigung an der Lastverteilerplatte 4. Das Fangband 12 wird hierzu durch nicht explizit gezeigte Schlitze .in der Lastverteilerplatte 12 gezogen und mit den beiden freien Enden fahrzeugseitig (z.B. an der Grundplatte 1) befestigt. Das Fangband 12 ist als elastisches Seil oder elastisches, breites Band ausgebildet. Die Länge des Seiles oder des Bandes und seine Elastizität sind so ausgebildet, daß sämtliche vorgesehenen Fangbänder 12 einerseits die maximale Bewegungsstrecke des Kniefängerbauteils begrenzen und andererseits das Kniefängerbauteil nach der Verschiebung wieder in seine Ausgangsstellung zurückziehen können. Eine andere Möglichkeit der Befestigung von Fangbändern am Kniefängerbauteil ist durch das Fangband 14 dargestellt. Dieses Fangband, welches erneut elastisch und als Band oder Seil (jeweils aus Kunststoff) ausgebildet ist, ist in die Abdeckung 3 eingegossen. Zur optimalen Einbettung des Fangbandes 14 in die Abdeckung 3 kann das Fangband beispielsweise ein Gewebeband sein. Auch bei dieser Ausführungsform sollen sämtliche Fangbänder eine Elastizität aufweisen, um das Kniefängerbauteil nach der Verlagerung in Richtung Knie des Insassen wieder zurück in die Ausgangsstellung zu ziehen. Die Ausbildung der Fangbänder 12, 14 als elastische Bänder oder Seile, die das Kniefängerbauteil, allgemeiner gesagt, eine Platte zum Zurückhalten der Knie des Insassen, nach erfolgter Verschiebung wieder in ihre Ausgangsstellung zurückziehen, ist natürlich nicht auf die dargestellten und beanspruchten Ausführungsformen des Kniefängerbauteils beschränkt. Vielmehr können die beschriebenen Fangbänder 12, 14 ganz allgemein der Positionierung eines ein- oder mehrteiligen Kniefängerbauteils dienen.

In den weiteren Figuren werden für die bereits bekannten Bauelemente die jeweils um Vielfache von 100 erhöhten Bezugszeichen verwendet, so daß auf die vorangegangene Beschreibung verwiesen werden kann.

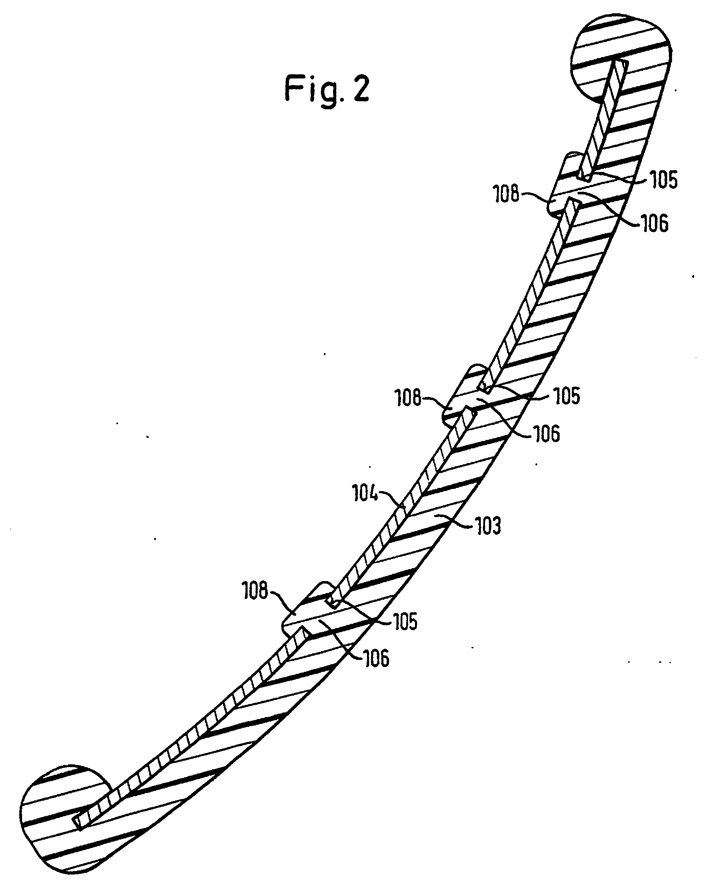

Figur 2 zeigt einen Schnitt durch ein Kniefängerbauteil nach einer zweiten Ausführungsform, wobei eine Abdeckung 103 auf eine Lastverteilerplatte 104 aufgeschäumt oder aufgespritzt ist. Aus beim Aufschäumen oder Aufspritzen durch die Öffnungen 105 hindurchgetretenem Material der Abdeckung sind Zapfen 106 gebildet und auf der Rückseite der Lastverteilerplatte 104 zu Verdickungen 108 umgeformt. Die Abdeckung 103 kann so in einem Arbeitsgang hergestellt und an der Lastverteilerplatte 104 befestigt werden. Das Kniefängerbauteil kann wie bereits bei Figur 1 beschrieben mit Befestigungselementen an der Grundplatte angebracht sein.

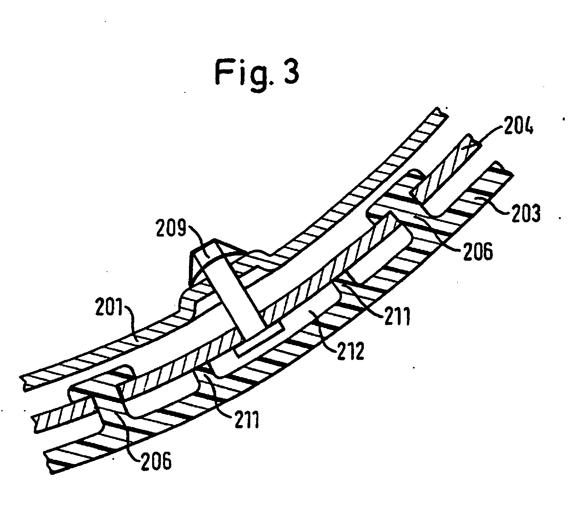

Figur 3 zeigt einen Querschnitt durch eine Grundplatte 201 und ein Kniefängerbauteil mit Abdeckung 203 und Lastverteilerplatte 204 gemäß einer dritten Ausführungsform, wobei die Abdeckung 203 an der Lastverteilerplatte 204 mittels der Zapfen 206, wie schon in Figur 1 gezeigt, befestigt ist. An der Rückseite der Abdeckung 203 sind zusätzliche Vorsprünge 211 ausgeformt. Mit den zusätzlichen Vorsprüngen 211 stützt sich die Abdeckung 203 an der Lastverteilerplatte 204 ab, wodurch ein Hohlraum 212 gebildet wird, der Raum läßt für den Kopf eines Befestigungselements 209, beispielsweise einer Schraube oder eines Bolzens.

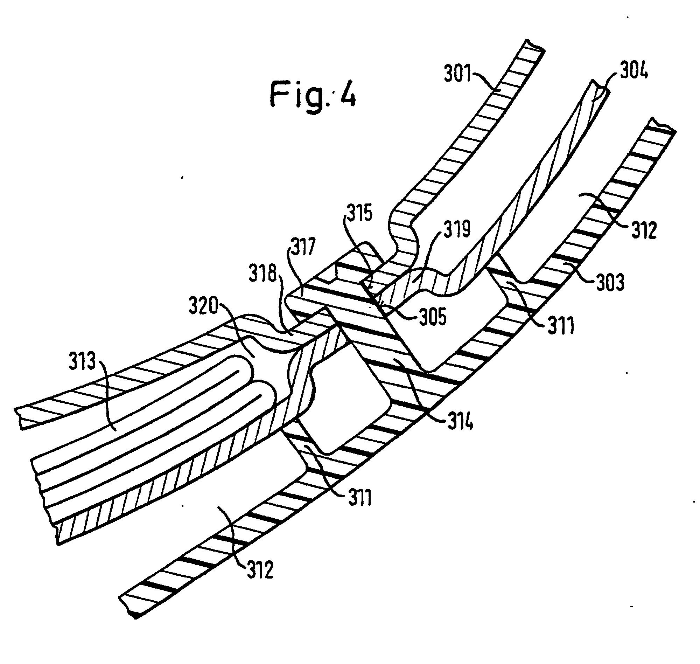

Figur 4 zeigt einen Querschnitt durch eine aktive Knie-Rückhalteeinrichtung nach einer vierten Ausführungsform, mit einem zwischen einer Grundplatte 301 und einer Lastverteilerplatte 304 angebrachten, aufblasbaren Gassack 313. Ein an die Abdeckung 303 angeformter Zapfen 314 ragt durch eine Öffnung 305 in der Lastverteilerplatte 304 und eine Öffnung 315 in der Grundplatte 301. Der Zapfen 314 ist an seinem freien Ende zur Verdickung 317 umgeformt und hält so durch formschlüssige Verbindung die Abdeckung 303, die Lastverteilerplatte 304 und die Grundplatte 301 ohne zusätzliches Bauteil zusammen. Die Wirkungsweise des Gassacks 313 ist aus dem Stand der Technik hinreichend bekannt, so daß an dieser Stelle nicht näher darauf eingegangen wird. Im Rückhaltefall übt das expandierende Volumen des Gassacks 313 auf das Kniefängerbauteil eine Kraft in Richtung von der Grundplatte 301 weg aus, die eine Zugspannung in dem Zapfen 314 verursacht, solange bis der Zapfen 314 bricht oder die Verdickung 317 abgeschert wird und sich damit das Kniefängerbauteil von der Grundplatte 301 löst. Durch die Wahl des Durchmessers und/oder des Materials des Zapfens 314 kann die maximale Bruchlast, bei der sich das Kniefängerbauteil von der Grundplatte 301 löst, weitgehend vorherbestimmt werden. Es kann auch eine Sollbruchstelle durch Anformen einer Kerbe oder eines Radius an dem Zapfen 314 vorgesehen sein.

An der Innenseite der Abdeckung 303 sind weitere Vorsprünge 311 angeformt, die sich auf der Lastverteilerplatte 304 abstützen und somit einen Raum 312 für eine zusätzliche Polsterung zwischen der Abdeckung 303 und der Lastverteilerplatte 304 bieten. Außerdem kann die Abdeckung 303 zusätzlich auf die in Figur 1 gezeigte Weise an der Lastverteilerplatte 304 befestigt sein.

In der Grundplatte 301 sind Vorsprünge in Form von Ausformungen 318 vorgesehen, welche in Richtung der Lastverteilerplatte 304 vortreten und sich auf Ausformungen 319 in der Lastverteilerplatte 304 abstützen. Dadurch wird zwischen der Lastverteilerplatte und der Grundplatte 301 ohne zusätzliche Distanzstücke ein Hohlraum 320 gebildet, welcher zur Aufnahme des gefalteten Gassacks 313 dient.

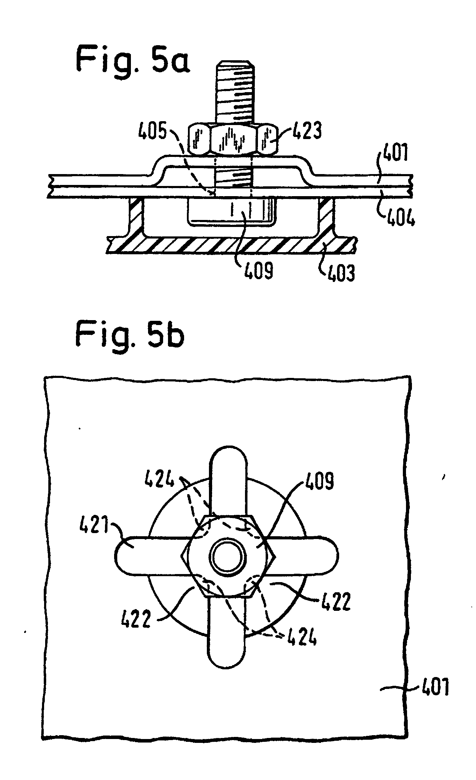

In den Figuren 5a und 5b ist eine Befestigung eines Kniefängerbauteils an einer Grundplatte 401 gemäß einer fünften Ausführungsform dargestellt. Figur 5a zeigt einen Querschnitt durch eine Abdeckung 403, eine Lastverteilerplatte 404 und die Grundplatte 401 mit einem Befestigungselement 409. In der Grundplatte 401, in Figur 5b in der Ansicht gezeigt, ist eine Öffnung 421 vorgesehen, deren Berandung Lappen 422 bilden, die radial nach innen ragen. Das Befestigungselement 409 ist beispielsweise eine Schraube, die durch eine Öffnung 405 in der Lastverteilerplatte 404 und durch die Öffnung 421 in der Grundplatte 401 geführt und auf der Rückseite der Grundplatte 401 durch eine Mutter 423 gesichert ist. Der Kopf der Schraube 409 hintergreift die Lastverteilerplatte 404 im Bereich der Öffnung 405, während die der Grundplatte 401 zugewandte Fläche der Mutter 423 in den Bereichen 424 der Lappen 422 auf diesen aufliegt. Somit ist das Kniefängerbauteil über die Lastverteilerplatte 404 an der Grundplatte 401 befestigt.

Anstelle der Schraube 409 ist auch, wie bei Figur 1 beschrieben, ein anderes Befestigungselement, beispielsweise ein Niet oder ein auf die Lastverteilerplatte 404 aufgeschweißter oder in sie eingesetzter. Bolzen, möglich.

Der im Rückhaltefall expandierende Gassack 413, der, wie beispielsweise bei Figur 4 beschrieben, zwischen der Lastverteilerplatte 404 und der Grundplatte 401 angebracht ist, übt auf die Lastverteilerplatte 404 eine in Richtung von der Grundplatte 401 weg gerichtete Kraft aus, welche über die Schraube 409 und die Mutter 423 auf die Lappen 422 wirkt und diese in Richtung der Lastverteilerplatte 404 verformt, so daß sich die Öffnung 421 erweitert und schließlich die Mutter 423 freigibt. Auf diese Weise löst sich das Kniefängerbauteil mit der Lastverteilerplatte 404 und der Abdeckung 403 von der Grundplatte 401, wobei die Befestigungselemente 409 in der Lastverteilerplatte 404 verbleiben.

Die beschriebene Funktionsweise bleibt erhalten, wenn die Öffnung 421 statt in der Grundplatte 401 in der Lastverteilerplatte 404 vorgesehen wird. In diesem Fall verbleiben die Befestigungselemente 409 nach dem Ablösen des Kniefängerbauteils in der Grundplatte 401.

Die Öffnungen 421 können beispielsweise durch Laser oder Stanzen hergestellt werden. In der dargestellten Ausführungsform hat die Öffnung 421 die Form eines Kreuzes. Es sind jedoch auch andere Formen möglich, beispielsweise in Gestalt eines Sterns. Wesentlich für die Funktionsweise ist lediglich, daß Lappen ausgebildet sind, die verformt werden können. Je nachdem, bei welcher Kraft die Lappen 422 das Befestigungselement 409 freigeben sollen, kann die Form der Lappen 422 gewählt sein. Weiterhin bietet auch die Wahl der Stärke des Materials, in dem die Öffnungen 421 ausgebildet sind einen Spielraum für die Größe der Kraft.

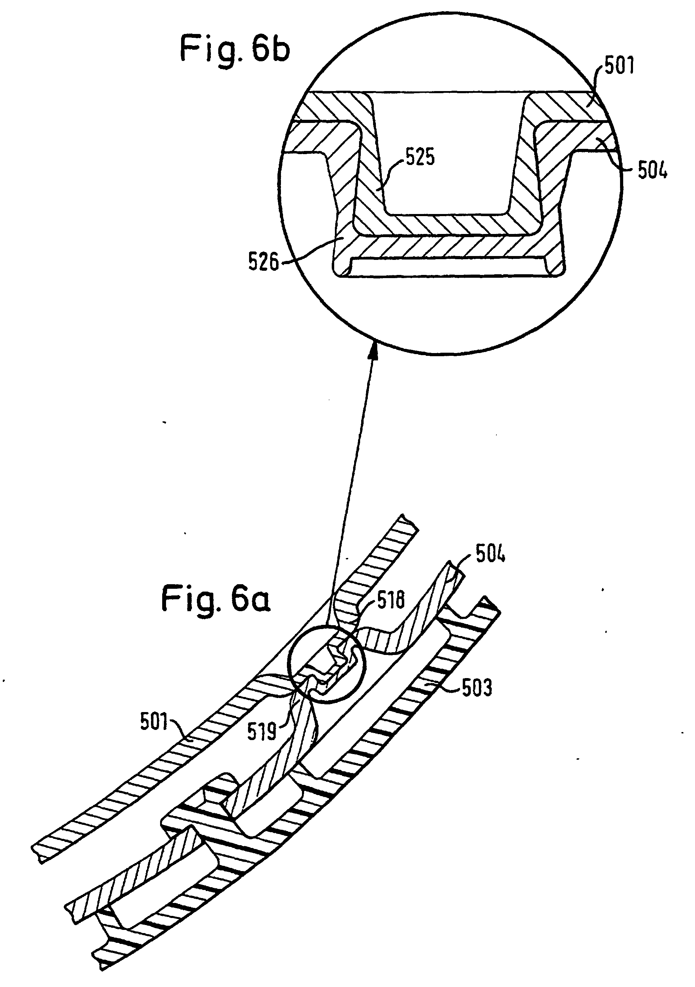

Die Figuren 6a und 6b zeigen einen Schnitt durch eine Grundplatte 501 und ein Kniefängerbauteil mit einer Lastverteilerplatte 504 und einer Abdeckung 503 nach einer sechsten Ausführungsform, wobei in Figur 6b eine Vergrößerung des umrandeten Ausschnitts aus Figur 6a dargestellt ist. In dieser Ausführungsform ist die Lastverteilerplatte 504 mittels des an sich bekannten Verfahrens des Durchsetzfügens an der Grundplatte 501 befestigt, und zwar im Bereich der Vorsprünge 518 und 519, die schon bei Figur 4 beschrieben wurden. Beim Durchsetzfügen werden einander berührende Abschnitte von Lastverteilerplatte 504 und Grundplatte 501 in einer Presse gleichzeitig so verformt, daß napfartige Vertiefungen 525, 526 entstehen, wobei die Vertiefungen 525 der Grundplatte 501 formschlüssig in die Vertiefungen 526 der Lastverteilerplatte 504 eingreifen oder umgekehrt. Infolge der leicht konischen Form der Vertiefungen 525, 526 ergibt sich eine feste Verbindung, die bei einer aktiven Knie-Rückhalteeinrichtung im Rückhaltefall durch die Kraft des expandierenden Gassacks wieder gelöst werden kann. Auch bei dieser Befestigungsart sind keine zusätzlichen Bauteile erforderlich.

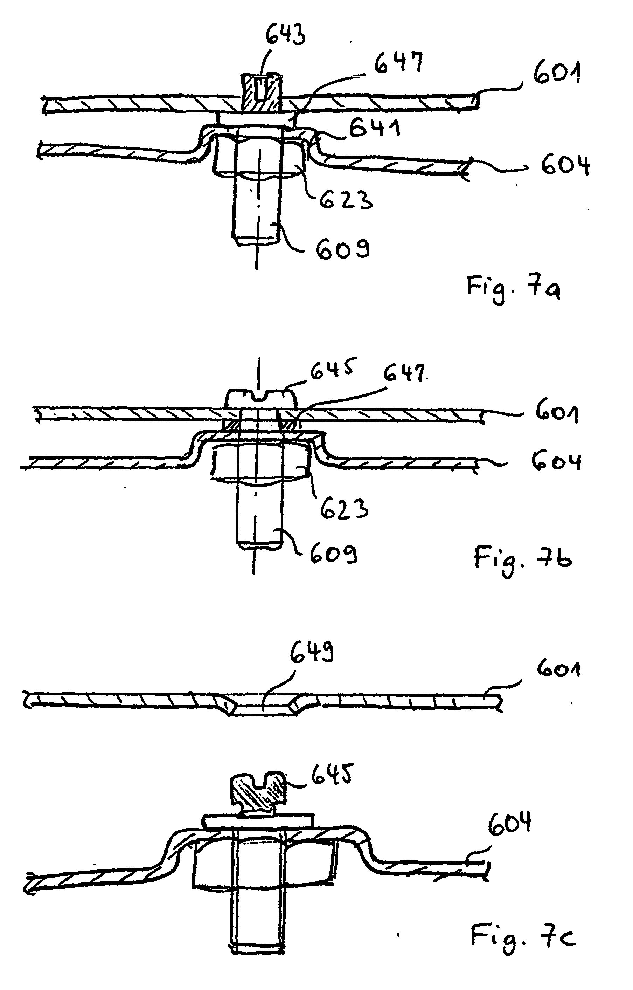

In Figur 7a ist der Bereich der Grundplatte 601 und der Lastverteilerplatte 604 dargestellt, in dem diese beiden Platten miteinander verbunden sind, wobei mehrere solcher Befestigungsstellen vorgesehen sind. Die Lastverteilerplatte hat eine Vertiefung 641, die als Abstandhalter zwischen den beiden Platten und als Aufnahme für eine Mutter 623 dient. Ein Gewindebolzen 609 ist in die Mutter eingedreht und ragt mit einem Ende durch eine Bohrung in der Grundplatte 601 hindurch, wobei dieses Ende des Gewindebolzens 609 einen Schlitz 643 für einen Schraubendreher hat. In Figur 7a sind die Grundplatte 601 und die Lastverteilerplatte 604 noch nicht formschlüssig aneinander befestigt. Nach dem Durchstecken des Gewindebolzens 609 durch die Öffnung in der Grundplatte 601 wird das durch die Öffnung ragende Ende des Schraubbolzens 609 umgeformt, so daß sich ein Kopf 645 ergibt, wie er in Figur 7b dargestellt ist. In diesem Zustand sind die Grundplatte 601 und die Lastverteilerplatte 604 miteinander verbunden. Zwischen den beiden Platten liegt noch eine Distanzscheibe 647. Sobald die Expansionsvorrichtung in Form des Gassacks, der in dieser Ansicht nicht dargestellt ist, betätigt wird, wird eine so hohe Kraft auf die Lastverteilerplatte 604 ausgeübt, daß der Rand der Öffnung 649 (siehe Figur 7c) in der Grundplatte 601 plastisch verformt wird oder einreißt, wodurch der Kopf 645 durch die Öffnung 649 rutscht und die Lastverteilerplatte 604 in Richtung Knie des Insassen bewegt wird. Die Verbindung wird damit zerstört. Alternativ kann die Mutter 623 auch weggelassen werden, und der Bolzen 609 wird in eine der beiden Platten 601, 604 eingedreht oder an einer Seite ähnlich einem Niet umgeformt. Um fliegende Teile zu vermeiden, kann der Kopf 645 oder die Mutter 623 an der entsprechenden Platte 601, 604 befestigt sein, z.B. durch Kleben.

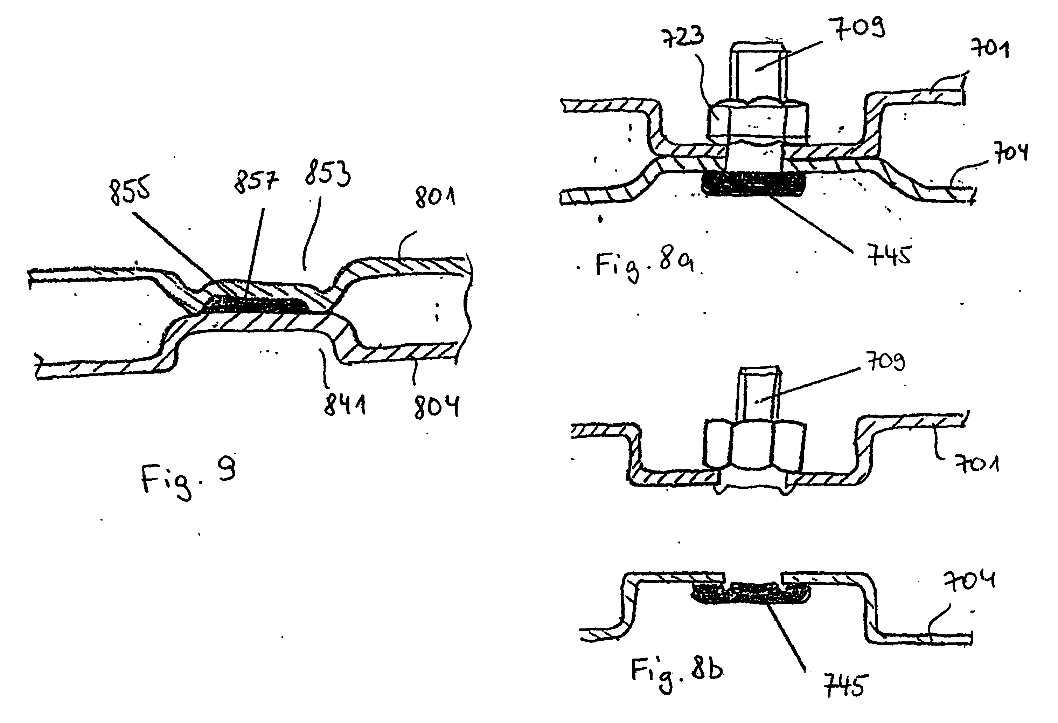

Bei der Ausführungsform nach Figur 8a ist der Gewindebolzen 709 durch die beiden Platten 701 und 704 gesteckt, was z.B. durch Einschlagen oder Einpressen erfolgen kann. Der Kopf 745 des Bolzens hat auf seiner Unterseite, die an der Lastverteilerplatte 704 anliegt, eine Verzahnung, die einem Drehen des Bolzens 709 beim Aufschrauben der Mutter 723 entgegenwirken soll. Die Verwendung eines Bolzens, insbesondere aus Metall hat den Vorteil, daß die Kraft zum Lösen des Kniefängerbauteils kaum temperaturabhängig ist.

Wenn der Gassack (nicht gezeigt) aufgeblasen wird, bricht der Bolzen 709 unterhalb seines Kopfes an einer vorgegebenen Sollbruchstelle ab, so daß sich die Platten 701 und 704 voneinander entfernen können.

Bei der Ausführungsform nach Figur 9 haben die Grundplatte 801 und die Lastverteilerplatte 804 jeweils Vertiefungen 853 bzw. 841, wobei die umgeformten Wandungsteile beider Platten 801, 804 aufeinander zu liegen kommen und ein Abstandhalter gebildet wird. Der Bodenabschnitt 855 in der Platte 804 im Bereich der Vertiefung 853 ist auswärts umgeformt, damit sich zwischen den beiden Platten ein Hohlraum bildet, der mit Klebstoff 857 ausgefüllt wird. Die beiden Platten 801, 804 sind aneinander geklebt. Als Klebstoff wurden bereits zuvor einige Varianten genannt. Die Verklebung löst sich beim Entfalten des Gassacks. Bei dieser, wie bei den übrigen Ausführungsformen kann im übrigen die Lastverteilerplatte und/oder die Grundplatte aus Kunststoff ausgebildet sein. Im übrigen ist es auch möglich, die verschiedenen Varianten der Befestigung der Lastverteilerplatte an der Grundplatte miteinander zu kombinieren.

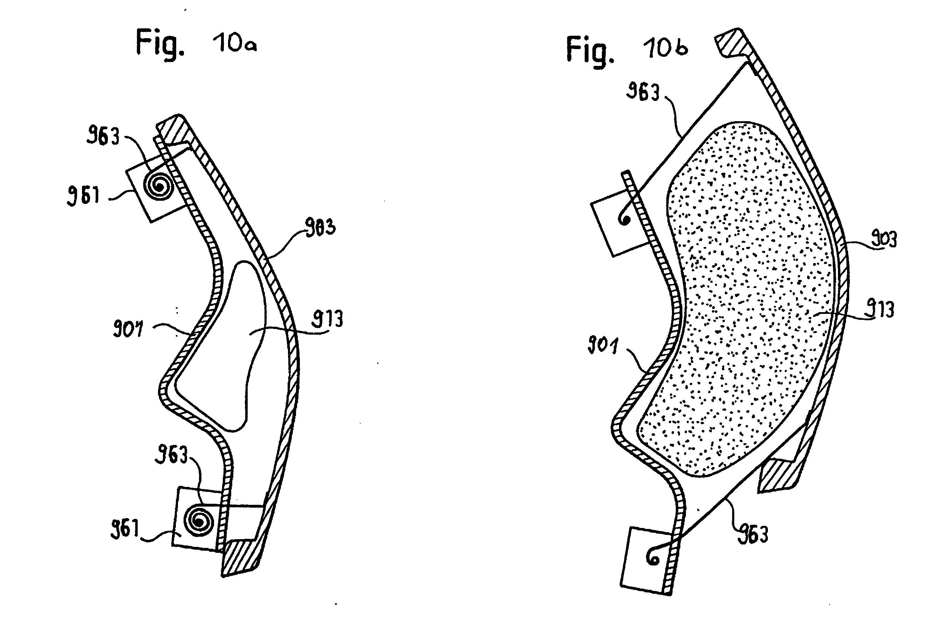

Die Ausführungsform nach Figur 10a zeigt, daß die Grundplatte 901 und die Lastverteilerplatte 903 durch mehrere, an den Enden der beiden Platten vorgesehene Dämpfungsvorrichtungen 961 miteinander verbunden sind. Die Dämpfungsvorrichtungen 961 bestehen aus aufgerollten Metallbändern 963, die sich beim Entfalten des Gassacks 913 abwickeln (vgl. Figur 10b). Durch die Metallbänder 963 werden die Platten 901 und 903 auch nach dem Zusammenfallen des Gassacks auf Abstand gehalten. Bei einem Sekundäraufprall dient dann das Kniefängerbauteil erneut als Rückhaltemittel. Beim Auftreffen der Knie auf das Kniefängerbauteil wird eine Kraft in das Kniefängerbauteil in Richtung Ausgangsposition des Kniefängerbauteils (Figur 10a) ausgeübt, und die Metallbänder 963 werden plastisch deformiert.

## Patentansprüche

1. Knie-Rückhalteeinrichtung für Fahrzeuge, mit einer Grundplatte (1; 201; 301; 401; 501) und einem Kniefängerbauteil, das an der Grundplatte (1; 201; 301; 401; 501) befestigt ist,
wobei das Kniefängerbauteil eine Lastverteilerplatte (4; 104; 204; 304; 404; 504) und eine Abdeckung (3; 103; 203; 303; 403; 503) aus Kunststoff
und die Abdeckung (3; 103; 203; 303; 403; 503) eine der Lastverteilerplatte (4; 104; 204; 304; 404; 504) zugewandte Rückseite und eine entgegengesetzt gerichtete Vorderseite aufweist,
**dadurch gekennzeichnet,**
**daß** die Abdeckung (3; 103; 203; 303; 403; 503) an der Lastverteilerplatte (4; 104; 204; 304; 404; 504) mittels an der Rückseite der Abdeckung (3; 103; 203; 303; 403; 503) angeformter Zapfen (6; 106; 206) formschlüssig befestigt ist, die durch entsprechende Öffnungen (5; 105; 305; 405; 505) in der Lastverteilerplatte (4; 104; 204; 304; 404; 504) hindurchragen und die an ihren freien Enden (7) so umgeformt sind, daß die freien Enden (7) gegenüber den Öffnungen (5; 105; 305; 405; 505) radial nach außen vorstehen.

2. Knie-Rückhalteeinrichtung nach Anspruch 1, **dadurch gekennzeichnet, daß** die Abdeckung (3) aus thermoplastischem Kunststoff besteht und die freien Enden (7) der angeformten Zapfen (6) unter Hitzeeinwirkung umgeformt sind.

3. Knie-Rückhalteeinrichtung nach Anspruch 2, **dadurch gekennzeichnet, daß** die freien Enden unter Bildung einer Verdickung (8; 108) umgeformt sind.

4. Knie-Rückhalteeinrichtung nach einem der vorstehenden Ansprüche, **dadurch gekennzeichnet, daß** die Abdeckung (103) auf die Lastverteilerplatte (104) aufgeschäumt oder aufgespritzt ist.

5. Knie-Rückhalteeinrichtung nach einem der vorstehenden Ansprüche, **dadurch gekennzeichnet, daß** eine Expansionsvorrichtung (313) zwischen Kniefängerbauteil und Grundplatte (301) vorgesehen ist, welche das Kniefängerbauteil im Rückhaltefall in Richtung Knie verschiebt.

6. Knie-Rückhalteeinrichtung nach Anspruch 5, **dadurch gekennzeichnet, daß** wenigstens ein Zapfen (314) durch eine Öffnung (315) in der Grundplatte (301) hindurchragt und an seinem freien Ende so umgeformt ist, daß das Kniefängerbauteil formschlüssig an der Grundplatte (301) befestigt ist.

7. Knie-Rückhalteeinrichtung nach Anspruch 5, **dadurch gekennzeichnet, daß** in der Grundplatte (401) Öffnungen (421) vorgesehen sind, durch die an dem Kniefängerbauteil angebrachte Befestigungselemente (409) ragen und
daß die Berandung der Öffnungen (421) radial nach innen ragende Lappen (422) definiert und
die Befestigungselemente (409) die Grundplatte (401) wenigstens in einem Teilbereich (424) der Berandung hintergreifen,
wobei die Berandung so ausgebildet ist, daß sie im Rückhaltefall von den Befestigungselementen (409) verformt wird und sich die Befestigungselemente (409) von der Grundplatte (401) lösen.

8. Knie-Rückhalteeinrichtung nach Anspruch 5, **dadurch gekennzeichnet, daß** in der Lastverteilerplatte Öffnungen vorgesehen sind, durch die an dem Kniefangerbauteil angebrachte Befestigungselemente ragen und
daß die Berandung der Öffnungen radial nach innen ragende Lappen definiert und
die Befestigungselemente die Lastverteilerplatte wenigstens in einem Teilbereich der Berandung hintergreifen,
wobei die Berandung so ausgebildet ist, daß sie im Rückhaltefall von den Befestigungselementen verformt wird und sich die Befestigungselemente vom Kniefängerbauteil lösen.

9. Knie-Rückhalteeinrichtung nach Anspruch 7 oder 8, **dadurch gekennzeichnet, daß** das Befestigungsmittel ein verbreitertes, angeformtes Ende hat, das zwischen der Abdeckung (403) und der Lastverteilerplatte (404) angeordnet und am Kniefängerbauteil befestigt ist.

10. Knie-Rückhalteeinrichtung nach Anspruch 5, **dadurch gekennzeichnet, daß** die Befestigung des Kniefängerbauteils an der Grundplatte (501) dadurch erfolgt, daß die Grundplatte (501) und die Lastverteilerplatte (504) mittels Durchsetzfügens miteinander verbunden sind.

11. Knie-Rückhalteeinrichtung nach Anspruch 5, **dadurch gekennzeichnet, daß** Lastverteilerplatte (604; 704) und Grundplatte (601; 701) mittels wenigstens eines Bolzens (609; 709) miteinander verbunden sind, wobei die Verbindung durch die beim Aktivieren der Expansionsvorrichtung auf das Kniefängerbauteil ausgeübte Kraft zerstört wird.

12. Knie-Rückhalteeinrichtung nach Anspruch 11, **dadurch gekennzeichnet, daß** der Bolzen (709) beim Aktivieren der Expansionsvorrichtung zerstört wird.

13. Knie-Rückhalteeinrichtung nach Anspruch 11, **dadurch gekennzeichnet, daß** sich der Bolzen (609) bei Aktivieren der Expansionsvorrichtung von der Grundplatte (601) oder der Lastverteilerplatte (604) löst.

14. Knie-Rückhalteeinrichtung nach einem der Ansprüche 11 bis 13, **dadurch gekennzeichnet, daß** der Bolzen (609; 709) ein Gewindebolzen ist, auf den eine Mutter (623; 723) aufgeschraubt ist.

15. Knie-Rückhalteeinrichtung nach Anspruch 5, **dadurch gekennzeichnet, daß** die Grundplatte (801) und die Lastverteilerplatte (804) miteinander so verklebt sind, daß die Verbindung beim Aktivieren der Expansionsvorrichtung durch die von dieser auf das Kniefängerbauteil ausgeübte Kraft zerstört wird.

16. Knie-Rückhalteeinrichtung nach einem der Ansprüche 6 bis 15, **dadurch gekennzeichnet, daß** an der Lastverteilerplatte (304; 504), der Grundplatte (301; 501) und/oder der Abdeckung (203; 303; 503) Vorsprünge (211; 311, 318, 319; 518, 519) vorgesehen sind, die als Distanzhalter dienen.

17. Knie-Rückhalteeinrichtung nach Anspruch 16, **dadurch gekennzeichnet, daß** die Lastverteilerplatte (304; 504) im Bereich der Vorsprünge (318, 319; 518, 519) an der Grundplatte (301; 501) befestigt ist.

18. Knie-Rückhalteeinrichtung nach einem der Ansprüche 5 bis 17, **dadurch gekennzeichnet, daß** zwischen Kniefängerbauteil und Grundplatte (901) wenigstens eine Dämpfungsvorrichtung (961) vorhanden ist, die nach dem Aktivieren der Expansionsvorrichtung und Entfernen des Kniefängerbauteils von der Grundplatte (901) einer in das Kniefängerbauteil in Richtung Ausgangsposition des Kniefängerbauteils gerichteten Kraft einen Widerstand entgegensetzt und durch diese Kraft deformiert wird.

19. Knie-Rückhalteeinrichtung nach Anspruch 18, **dadurch gekennzeichnet, daß** die Dämpfungsvorrichtung (961) Metallbänder (963) zwischen der Grundplatte (901) und dem Kniefängerbauteil aufweist.

## Claims

1. A knee restraint device for vehicles, comprising a base plate (1; 201; 301; 401; 501) and a knee protector component fastened to the base plate (1; 201; 301; 401; 501),
the knee protector component having a load distributor plate (4; 104; 204; 304; 404; 504) and a covering (3; 103; 203; 303; 403; 503) of plastic,
and the covering (3; 103; 203; 303; 403; 503) having a rear face facing the load distributor plate (4; 104; 204; 304; 404; 504) and a front face directed in the opposite direction,
**characterized in that**
the covering (3; 103; 203; 303; 403; 503) is fastened to the load distributor plate (4; 104; 204; 304; 404; 504) in a form-fitting manner by means of pins (6; 106; 206) formed on the rear face of the covering (3; 103; 203; 303; 403; 503), which pins project through corresponding openings (5; 105; 305; 405; 505) in the load distributor plate (4; 104; 204; 304; 404; 504) and which are reshaped at their free ends (7) such that the free ends (7) project radially outwards and over the openings (5; 105; 305; 405; 505).

2. The knee restraint device according to Claim 1, **characterized in that** the covering (3) consists of thermoplastic material and the free ends (7) of the formed-on pins (6) are reshaped by the action of heat.

3. The knee restraint device according to Claim 2, **characterized in that** the free ends are reshaped with the formation of a thickening (8; 108).

4. The knee restraint device according to any of the preceding claims, **characterized in that** the covering (103) is applied on the load distributor plate (104) by foaming or injection-molding.

5. The knee restraint device according to any of the preceding claims, **characterized in that** an expansion device (313) is provided between the knee protector component and the base plate (301), which device moves the knee protector component toward the knees in the case of restraint.

6. The knee restraint device according to Claim 5, **characterized in that** at least one pin (314) projects through an opening (315) in the base plate (301) and is reshaped at its free end such that the knee protector component is fastened in a form-fitting manner to the base plate (301).

7. The knee restraint device according to Claim 5, **characterized in that** in the base plate (401) openings (421) are provided, through which fastening elements (409) project which are fixed to the knee protector component and
that the rim region of the openings (421) defines tongues (422) projecting radially inwards and
the fastening elements (409) engage behind the base plate (401) at least in a partial region (424) of the rim region,
the rim region being designed such that in the case of restraint it is deformed by the fastening elements (409) and the fastening elements (409) detach themselves from the base plate (401).

8. The knee restraint device according to Claim 5, **characterized in that** openings are provided in the load distributor plate, through which fastening elements project which are fixed to the knee protector component and
that the rim region of the openings defines tongues projecting radially inwards and
the fastening elements engage behind the load distributor plate at least in a partial region of the rim region,
the rim region being designed such that in the case of restraint it is deformed by the fastening elements and the fastening elements detach themselves from the knee protector component.

9. The knee restraint device according to Claim 7 or 8, **characterized in that** the fastening means has a widened, integrally formed end which is arranged between the covering (403) and the load distributor plate (404) and is fastened to the knee protector component.

10. The knee restraint device according to Claim 5, **characterized in that** the fastening of the knee protector component to the base plate (501) takes place **in that** the base plate (501) and the load distributor plate (504) are connected with each other by means of penetration joining.

11. The knee restraint device according to Claim 5, **characterized in that** the load distributor plate (604; 704) and the base plate (601; 701) are connected with each other by means of at least one bolt (609; 709), the connection being destroyed by the force exerted on the knee protector component upon activation of the expansion device.

12. The knee restraint device according to Claim 11, **characterized in that** the bolt (709) is destroyed upon activation of the expansion device.

13. The knee restraint device according to Claim 11, **characterized in that** the bolt (609) detaches itself from the base plate (601) or the load distributor plate (604) upon activation of the expansion device.

14. The knee restraint device according to any of Claims 11 to 13, **characterized in that** the bolt (609; 709) is a threaded bolt onto which a nut (623; 723) is screwed.

15. The knee restraint device according to Claim 5, **characterized in that** the base plate (801) and the load distributor plate (804) are bonded with each other such that the connection is destroyed on activation of the expansion device by the force it exerts on the knee protector component.

16. The knee restraint device according to any of Claims 6 to 15, **characterized in that** on the load distributor plate (304; 504), the base plate (301; 501) and/or the covering (203; 303; 503), projections (211; 311, 318, 319; 518, 519) are provided, which serve as spacers.

17. The knee restraint device according to Claim 16, **characterized in that** the load distributor plate (304; 504) is fastened to the base plate (301; 501) in the region of the projections (318, 319; 518, 519).

18. The knee restraint device according to any of Claims 5 to 17, **characterized in that** between the knee protector component and the base plate (901) at least one damping device (961) is provided which, after the expansion device has been activated and the knee protector component has moved away from the base plate (901), resists a force directed into the knee protector component toward the initial position of the knee protector component and is deformed by such force.

19. The knee restraint device according to Claim 18, **characterized in that** the damping device (961) includes metal bands (963) between the base plate (901) and the knee protector component.

## Revendications

1. Système de retenue des genoux pour véhicules automobiles, comportant une plaque de base (1 ; 201 ; 301 ; 401 ; 501) et un composant de protection des genoux qui est fixé sur la plaque de base (1 ; 201 ; 301 ; 401 ; 501),
le composant de protection des genoux présentant une plaque de répartition de charge (4 ; 104 ; 204 ; 304 ; 404 ; 504) et un couvercle (3 ; 103 ; 203 ; 303 ; 403 ; 503) en matière plastique
et le couvercle (3 ; 103 ; 203 ; 303 ; 403 ; 503) présentant une face postérieure tournée vers la plaque de répartition de charge (4 ; 104 ; 204 ; 304 ; 404 ; 504) et une face antérieure orientée à l'opposé,
**caractérisé en ce que**
le couvercle (3 ; 103 ; 203 ; 303 ; 403 ; 503) est fixé par coopération de formes sur la plaque de répartition de charge 4 ; 104 ; 204 ; 304 ; 404 ; 504) au moyen de tenons (6 ; 106 ; 206) façonnés sur la face postérieure du couvercle (3 ; 103 ; 203 ; 303 ; 403 ; 503), lesquels font saillie à travers des ouvertures (5 ; 105 ; 205 ; 305 ; 405 ; 505) correspondantes et sont refaçonnés à leurs extrémités libres (7) de telle sorte que les extrémités libres (7) font radialement saillie vers l'extérieur à l'opposé des ouvertures (5 ; 105 ; 205 ; 305 ; 405 ; 505).

2. Système de retenue des genoux selon la revendication 1, **caractérisé en ce que** le couvercle (3) est en matière thermoplastique et **en ce que** les extrémités libres (7) des tenons (6) sont refaçonnées sous l'effet de la chaleur.

3. Système de retenue des genoux selon la revendication 2, **caractérisé en ce que** les extrémités libres sont refaçonnées en formant un renflement (8 ; 108).

4. Système de retenue des genoux selon l'une des revendications précédentes, **caractérisé en ce que** le couvercle (103) est appliqué sur la plaque de répartition de charge (104) par moussage ou par moulage par injection.

5. Système de retenue des genoux selon l'une des revendications précédentes, **caractérisé en ce qu'**un dispositif d'expansion (31) est prévu entre le composant de protection des genoux et la plaque de base (301) qui, en cas de retenue, déplace le composant de protection des genoux en direction des genoux.

6. Système de retenue des genoux selon la revendication 5, **caractérisé en ce qu'**au moins un tenon (314) fait saillie à travers une ouverture (315) dans la plaque de base (301) et est refaçonné à son extrémité libre de telle sorte que le composant de protection des genoux est fixé par coopération de formes à la plaque de base (301).

7. Système de retenue des genoux selon la revendication 5, **caractérisé en ce que** dans la plaque de base (401) sont prévues des ouvertures (421) à travers lesquelles font saillie des éléments de fixation (409) montés sur le composant de protection des genoux, et
**en ce que** le bord des ouvertures (421) définit des pattes (422) faisant saillie radialement vers l'intérieur,
et **en ce que** les éléments de fixation (409) engagent par l'arrière la plaque de base (401) au moins dans une région partielle (424) du bord,
le bord étant réalisé de telle sorte qu'en cas de retenue, il est déformé par les éléments de fixation (409) et les éléments de fixation (409) se détachent de la plaque de base (401).

8. Système de retenue des genoux selon la revendication 5, **caractérisé en ce que** dans la plaque de répartition de charge sont prévues des ouvertures à travers lesquelles des font saillie des éléments de fixation montés sur le composant de protection des genoux, et
**en ce que** le bord des ouvertures définit des pattes faisant saillie radialement vers l'intérieur,
et **en ce que** les éléments de fixation engagent par l'arrière la plaque de répartition de charge au moins dans une région partielle du bord,
le bord étant réalisé de telle sorte qu'en cas de retenue, il est déformé par les éléments de fixation et les éléments de fixation se détachent du composant de protection des genoux.

9. Système de retenue des genoux selon la revendication 7 ou 8, **caractérisé en ce que** le moyen de fixation a une extrémité façonnée élargie qui est agencée entre le couvercle (403) et la plaque de répartition de charge (404) et qui est fixée sur le composant de protection des genoux.

10. Système de retenue des genoux selon la revendication 5, **caractérisé en ce que** la fixation du composant de protection des genoux sur la plaque de base (501) est effectuée par le fait que la plaque de base (501) et la plaque de répartition de charge (504) sont reliées l'une à l'autre par assemblage par pénétration.

11. Système de retenue des genoux selon la revendication 5, **caractérisé en ce que** la plaque de répartition de charge (604 ; 704) et la plaque de base (601 ; 701) sont reliées l'une à l'autre au moyen d'au moins un boulon (609 ; 709), la liaison étant détruite par 1a force exercée sur le composant de protection des genoux lorsque le dispositif d'expansion est activé.

12. Système de retenue des genoux selon la revendication 11, **caractérisé en ce que** le boulon (709) est détruit lorsque le dispositif d'expansion est activé.

13. Système de retenue des genoux selon la revendication 11, **caractérisé en ce que** le boulon (609) se détache de la plaque de base (601) ou de la plaque de répartition de charge (604) lorsque le dispositif d'expansion est activé.

14. Système de retenue des genoux selon l'une des revendications 11 à 13, **caractérisé en ce que** le boulon (609 ; 709) est un boulon fileté sur lequel est vissé un écrou (623 ; 723).

15. Système de retenue des genoux selon la revendication 5, **caractérisé en ce que** la plaque de base (801) et la plaque de répartition de charge (804) sont collées l'une à l'autre de telle sorte que lorsque le dispositif d'expansion est activé, la liaison est détruite par la force exercée par celui-ci sur le composant de protection des genoux.

16. Système de retenue des genoux selon l'une des revendications 6 à 15, **caractérisé en ce que** sur la plaque de répartition de charge (304 ; 504), la plaque de base (301 ; 501) et/ou sur le couvercle (203 ; 303 ; 503) sont prévues des saillies (211 ; 311, 381, 319 ; 518, 519) qui servent d'écarteurs.

17. Système de retenue des genoux selon la revendication 16, **caractérisé en ce que** la plaque de répartition de charge (304 ; 504) est fixée sur la plaque de base (301 ; 501) dans la région des saillies (318, 319 ; 518, 519).

18. Système de retenue des genoux selon l'une des revendications 5 à 17, **caractérisé en ce qu'**entre le composant de protection des genoux et la plaque de base (901) se trouve au moins un dispositif d'amortissement (961) qui, après avoir activé le dispositif d'expansion et enlevé le composant de protection des genoux de 1a plaque de base (901), oppose une résistance à une force dirigée dans le composant de protection des genoux en direction de la position initiale du composant de protection des genoux, et qui est déformé par cette force.

19. Système de retenue des genoux selon la revendication 18, **caractérisé en ce que** le dispositif d'amortissement (961) présente des bandes métalliques (963) entre la plaque de base (901) et le composant de protection des genoux.
